# EUROPÄISCHE PATENTSCHRIFT

(11) **EP 3 015 664 B1**
(45) Veröffentlichungstag und Bekanntmachung des Hinweises auf die Patenterteilung: **28.06.2017**
(21) Anmeldenummer: 15184262.2
(22) Anmeldetag: 08.09.2015
(51) Int. Cl.: F01L 13/02, F01L 13/06, F02D 13/02, F02D 27/00

(54) **UMSTEUERVERFAHREN ZUM SCHNELLEN UMSTEUERN EINES MOTORS, COMPUTERPROGRAMMPRODUKT, SOWIE MOTOR**
SWITCHOVER METHOD FOR QUICKLY SWITCHING OVER A MOTOR, COMPUTER PROGRAM PRODUCT, AND MOTOR
PROCEDE DE COMMUTATION RAPIDE D'UN MOTEUR, PRODUIT DE PROGRAMME D'ORDINATEUR ET MOTEUR

(30) Priorität: 31.10.2014 EP 14191349; 16.02.2015 EP 15155263
(43) Veröffentlichungstag der Anmeldung: 04.05.2016
(73) Patentinhaber: Winterthur Gas & Diesel AG, 8401 Winterthur (CH)
(72) Erfinder: Häussler, Axel, 8404 Winterthur (CH); Fullagar, Edwin, 8404 Winterthur (CH)
(74) Vertreter: Intellectual Property Services GmbH

(56) Entgegenhaltungen:
- DE-C- 895 550
- DE-C1- 19 825 411
- GB-A- 722 568
- GB-A- 190 927 736
- US-A- 4 226 216

## Beschreibung

Die Erfindung betrifft ein Umsteuerverfahren zum schnellen Umsteuern einer Drehung eines Motors, insbesondere Hubkolbenbrennkraftmaschine in Form eines langsam laufenden längsgespülten Zweitakt-Grossdieselmotor, aus einer ersten Drehrichtung in eine entgegengesetzte Drehrichtung, ein Computerprogrammprodukt zur Installation auf einer Datenverarbeitungsanlage zur Ansteuerung eines Motors, sowie einen Motor, insbesondere Hubkolbenbrennkraftmaschine in Form eines langsam laufenden längsgespülten Zweitakt-Grossdieselmotors gemäss dem Oberbegriff der unabhängigen Ansprüche 1, 14, und 15.

Grossdieselmotoren werden häufig als Antriebsaggregate für Schiffe oder auch im stationären Betrieb, z.B. zum Antrieb grosser Generatoren zur Erzeugung elektrischer Energie eingesetzt. Dabei laufen die Motoren in der Regel über beträchtliche Zeiträume im Dauerbetrieb, was hohe Anforderungen an die Betriebssicherheit und die Verfügbarkeit stellt. Daher sind für den Betreiber insbesondere lange Wartungsintervalle, geringer Verschleiss und ein wirtschaftlicher Umgang mit Brenn- und Betriebsstoffen zentrale Kriterien für den Betrieb der Maschinen. Unter anderem ist das Kolbenlaufverhalten solcher grossbohrigen langsam laufenden Dieselmotoren ein bestimmender Faktor für die Länge der Wartungsintervalle, die Verfügbarkeit und über den Schmiermittelverbrauch auch unmittelbar für die Betriebskosten und damit für die Wirtschaftlichkeit.

In der Schifffahrt besteht seit jeher nicht nur der Wunsch sondern die Notwendigkeit die Fahrtrichtung eines Schiffes im Manövrierbetrieb, z.B. bei der Einfahrt in einen Hafen oder beim Manövrieren im Hafen, beispielweise bei einem Anlegemanöver oder in einem anderen Manövrierbetrieb in möglichst kurzer Zeit von Vorwärts- auf Rückwärtsfahrt oder umgekehrt zu wechseln. Das beinhaltet das Schiff von einer bestimmten Geschwindigkeit in möglichst kurzer Zeit und auf möglichst kurze Distanz abzubremsen und die Fahrtrichtung des Schiffes möglichst schnell umzukehren und auf eine vorgegebene Geschwindigkeit in dieser umgekehrten Richtung wieder möglichst schnell zu beschleunigen.

Eine damit verwandte technische Herausforderung ergibt sich in Notbremssituationen, nicht nur bei relativ langsamer Fahrt in Hafennähe sondern auch auf hoher z.B. bei voller Fahrt. Auch in einer solchen Notsituation muss das Schiff auf möglichst kurze Distanz möglichst schnell aus voller Fahrt abgebremst werden bzw. der Motor möglichst schnell umgesteuert werden, so dass die Schiffsschraube möglichst schnell in die entgegengesetzte Richtung dreht, so dass das Schiff umgehend in die entgegengesetzte Richtung weiterfahren kann.

Während zum Wechseln der Fahrtrichtung für relativ kleine Motorschiffe oder Motorboote seit langem verschiedene erprobte Verfahren zur Verfügung stehen und häufig einfach über Getriebe das Umsteuern bewerkstelligt werden kann, ist das schnelle Abbremsen bei sehr grossen Schiffen, die mit grossen Hubkolbenbrennkraftmaschinen, wie z.B. mit langsam laufenden längsgespülten Zweitakt-Grossdieselmotoren ausgestattet sind, ein bisher weitgehend nur unbefriedigend gelöstes Problem. Das betrifft sowohl den oben erwähnten Manövrierbetrieb bei relativ kleinen Geschwindigkeiten wie zum Beispiel im Hafen oder in Hafennähe als auch das beschriebene Problem des schnellen Umsteuern der Maschine von einer Drehrichtung in die entgegengesetzte Drehrichtung in einer Notbremssituation.

Das ist insbesondere bei den langsam laufenden längsgespülten Zweitakt-Grossdieselmotoren ein nicht zu unterschätzendes Problem, da bei diesen Motoren aufgrund ihrer enormen Grösse und Leistung die sinnvolle Verwendung eines Getriebes und / oder einer Kupplung zwischen Motor und Schiffsschraube praktisch ausgeschlossen ist, weshalb bei Schiffen mit solchen Motoren die Schiffschraube über ein Welle drehfest mit der Kurbelwelle des Grossdieselmotors verbunden ist.

Damit ist zwar die Konstruktion des Antriebs wesentlich einfacher im Vergleich zu einem Antrieb bei welchem zwischen Schiffsschraube und Motor noch ein Getriebe vorgesehen ist. Der Nachteil einer solchen Konstruktion ohne Getriebe und ohne Kupplung ist jedoch, dass die Schiffschraube immer, das heisst in jedem Betriebszustand drehfest mit dem Motor verbunden ist und zumindest im Betriebszustand des Motors, das heisst solange dieser nicht völlig zum Stillstand gekommen ist, von diesem nicht getrennt werden kann. Das heisst, in einem Betriebszustand, in dem der Motor zum Abbremsen des Schiffs abgestellt wird, was in der Praxis im Wesentlichen bedeutet, dass die Treibstoffzufuhr zum Motor unterbrochen wird, hält das Schiff nicht sofort einfach an Ort und Stelle an, sondern wird aufgrund seiner enormen Massenträgheit zunächst weiterfahren und nur allmählich nach und nach an Geschwindigkeit verlieren.

Die Schiffsschraube wird dabei nun zwar nicht mehr durch den Motor angetrieben; wird jetzt aber durch die fortdauernde Relativgeschwindigkeit zwischen Schiffschraube und Wasser durch die Fahrt durch das Wasser angetrieben. Da die Schiffsschraube aber drehfest mit dem Motor verbunden ist und diese vom Motor auch nicht getrennt werden kann, wird in einem solchen Betriebszustand jetzt auch der Motor von der Schiffsschraube angetrieben. Das heisst, in einem beträchtlichen Zeitraum nach dem Abstellen der Treibstoffzufuhr zum Motor wird dieser trotzdem weiter in der ursprünglichen Richtung drehen, weil er jetzt von der Schiffsschraube angetrieben wird.

Eine Beschleunigung des Abbremsens des Schiffes bzw. eine Umkehrung der Fahrtrichtung des Schiffes kann nur dadurch erreicht werden, dass der Motor in umgekehrter Drehrichtung neu gestartet wird. Das kann bei den meisten bekannten Schiffsmotoren und insbesondere bei den riesigen längsgespülten Zweitakt-Grossdieselmotoren nur dadurch erreicht werden, dass zu einem geeigneten Zeitpunkt, d.h. bei einem geeigneten Kurbelwinkel Pressluft, in der Fachsprache auch Startluft genannt, unter einem genügend hohen Druck in den Zylinderliner gepresst wird, so dass der Motor durch die auf die Kolben wirkende Startluft in die gewünschte umgekehrte Drehrichtung neu gestartet wird.

Aufgrund der enormen Kräfte, die wie oben erläutert die Schiffsschraube über die Kurbelwelle auf die Kolben in den Zylinderlinern des Motors derart ausübt, dass der Motor trotz unterbundener Treibstoffzufuhr weiter in der ursprüngliche Richtung dreht, kann der Motor frühestens dann in die entgegengesetzte Richtung neu gestartet werden, wenn der maximal zur Verfügung stehende Druck der Startluft ausreicht um die von der Schiffsschraube auf die Kolben wirkenden Kräfte soweit zu kompensieren, dass der Motor durch die Startluft in eine ausreichend schnelle Drehung in die entgegengesetzte Richtung versetzt werden kann, so dass bei Reaktivierung der Treibstoffzufuhr der Motor schliesslich selbstständig in die umgekehrte Richtung neu starten kann. Wenn der Motor in die entgegengesetzte Drehrichtung neu gestartet ist, wird selbstverständlich die drehfest mit dem Motor verbundene Schiffschraube vom Motor ebenfalls in die entgegengesetzte Richtung angetrieben, wodurch dann das Abbremsen des Schiffes zunehmend beschleunigt werden kann, bis die Fahrt des Schiffes schliesslich zum Stillstand kommt oder, falls gewünscht, das Schiff Fahrt in die entgegengesetzte Richtung aufnehmen kann.

Die Nachteile des oben geschilderten und bisher üblichen Verfahrens zum Abbremsen bzw. Umsteuern eines Schiffes liegen auf der Hand. Einerseits benötigt das Abbremsen eines Schiffes, insbesondere eine Schiffes mit einem langsam laufenden längsgespülten Zweitakt-Grossdieselmotor sehr viel Zeit, weil, bevor der Motor in die entgegengesetzte Richtung neu gestartet werden kann, zunächst solange zugewartet werden muss, bis das Schiff ausreichend an Fahrt verloren hat und genügend langsam geworden ist, so dass der Antrieb des Motors über die Schiffschraube durch die Startluft kompensiert werden kann.

Das nimmt bis heute nicht nur beträchtlich viel Zeit in Anspruch sondern führt in der Praxis auch zu einem beträchtlichen Startluftverbrauch, was insbesondere dann von grossem Nachteil ist, wenn das Schiff manövriert werden muss, zum Beispiel wenn bei einem Anlegemanöver im Hafen das Schiff in ständigem Wechsel zwischen "Ahead-Stop-Astern" mit unterschiedlichsten Kombinationen über das Stop-Kommando manövriert werden muss. Aber auch in einer Notbremssituation, wenn das Schiff zum Beispiel aus schneller Fahrt sehr schnell abgebremst werden muss, z.B. um in einer Notsituation eine Kollision mit einem anderen Schiff, mit einem Eisberg oder mit einem anderen Hindernis zuverlässig und rechtzeitig zu verhindern, benötigen die aus dem Stand der Technik bekannten Verfahren bis heute inakzeptabel viel Zeit bzw. es wird eine inakzeptabel grosse Menge an Startluft bei einem solchen Notbremsmanöver verbraucht. Die Katastrophe mit der berühmten Titanic, bei welcher es unter anderem nicht mehr gelungen ist das Schiff rechtzeitig abzubremsen, ist bis heute im öffentlichen Bewusstsein präsent. Auch wenn die Titanic nicht von einem langsam laufenden längsgespülten Zweitakt-Grossdieselmotor angetrieben wurde, ist die Problematik im Grundsatz dieselbe.

Damit die vom Schiff zurückgelegte Strecke beim Abbremsen bzw. beim Umsteuern in die entgegengesetzte Fahrtrichtung minimiert wird, wird häufig versucht den Motor zum frühest möglichen Zeitpunkt durch Zuführung der Startluft in die Zylinderliner umzusteuern. Je schneller der Motor, angetrieben durch die Schiffsschraube jedoch noch in die alte Richtung läuft, umso mehr Startluft bzw. Startluftenergie wird benötigt um das Umsteuern in die entgegengesetzte Richtung einleiten zu können. Das ist nicht nur teuer und energieintensiv, weil die Startluft zunächst mit entsprechenden Kompressoren erzeugt und in Druckspeichern gespeichert werden muss. Sondern das Verfahren birgt auch das Risiko, dass mehr oder weniger der gesamte Vorrat an Startluft zu schnell verbraucht wird und die vorhandene Startluft zum Beenden eines komplizierten Manövers mit zahlreichen Fahrtrichtungswechseln nicht ausreicht bzw. es bei schnellerer Fahrt trotz erheblichem Einsatz von Startluft trotzdem nicht gelingt den Motor in die entgegengesetzte Richtung zu starten. Das verzögert das Abbremsen nicht nur noch weiter, sondern kann vor allem auf hoher See nach einem entsprechenden Notbremsverfahren sogar zum Sicherheitsrisiko werden, weil in einer solchen Situation neue Startluft zunächst wieder bereitgestellt werden muss und in der Zwischenzeit der Motor somit überhaupt nicht mehr gestartet werden kann, was unter Umständen fatale Konsequenzen haben kann, da das Schiff in einer solchen Situation antriebslos ist.

Aufgabe der Erfindung ist es daher ein Verfahren bereitzustellen, mit welchem ein langsam laufender längsgespülter Zweitakt-Grossdieselmotor effizienter und schneller in eine entgegengesetzte Drehrichtung umgesteuert werden kann, wobei die aus dem Stand der Technik beschriebenen Probleme weitestgehend vermieden werden, insbesondere die aus dem Stand der Technik bekannten Probleme beim häufigen, in kurzen Zeitabständen Umsteuern des Motors vermieden werden, aber auch die beschriebenen fatalen Sicherheitsprobleme weitestgehend ausgeschlossen werden können, und zusätzlich ganz allgemein das Umsteuern des Motors ökonomischer und energiesparender vorgenommen werden kann.

Die diese Aufgaben lösenden Gegenstände der Erfindung sind durch die Merkmale des unabhängigen Anspruchs 1 gekennzeichnet.

Die abhängigen Ansprüche beziehen sich auf besonders vorteilhafte Ausführungsformen der Erfindung.

Die Erfindung betrifft somit ein Umsteuerverfahren zum schnellen Umsteuern einer Drehung eines Motors in Form eines längsgespülten Zweitakt-Grossdieselmotors umfassend einen Zylinder, in welchem ein Kolben zwischen einem oberen Totpunkt entsprechend einem Kurbelwinkel von 180° und einem unteren Totpunkt entsprechend einem Kurbelwinkel von 0° bzw. 360° hin- und herbewegbar angeordnet ist, sowie mit einem Ausslassventil, das über eine elektronische Ansteuereinrichtung hydraulisch mittels eines unter einem vorgegebenen Öffnungsdruck stehenden Hydraulikmediums über eine Ventilhydraulik betätigt wird, und bevorzugt anschliessend an eine Vorbremsphase mindestens die folgenden Verfahrensschritte umfasst.
In einer ersten Abbremsphase wird zur Reduzierung einer Drehgeschwindigkeit der Drehung des Motors in eine erste Drehrichtung eine Treibstoffzufuhr zum Motor mittels eines Stop-Kommandos an die Ansteuereinrichtung unterbrochen und / oder die Treibstoffzufuhr bleibt unterbrochen.

Erfindungsgemäss werden in der ersten Abbremsphase unterhalb einer vorgegebenen Grenzdrehzahl eine Mehrzahl der Auslassventile des Motors in einer vorgegeben Reihenfolge geöffnet und die geöffneten Auslassventile bleiben bis zum Abschluss der ersten Abbremsphase geöffnet. In einer zweiten Abbremsphase werden zumindest alle Auslassventile derjenigen Zylinder gleichzeitig geschlossen, bei welchen die Zuführung einer Spülluft durch die Spülschlitze des Zylinders unterbunden ist und in welchen sich der zugeordnete Kolben in einem Kompressionshub zwischen einem Kurbelwinkel von 0° und 180° befindet, so dass der Motor in einer der zweiten Abbremsphase folgenden Kickstartphase in eine zur ersten Drehrichtung entgegengesetzten Drehrichtung gedreht wird.

Bei einem für die Praxis besonders bevorzugten Ausführungsbeispiel ist die Hubkolbenbrennkraftmaschine wie erwähnt ein langsam laufender längsgespülter Zweitakt-Grossdieselmotor eines Schiffes, beispielsweise eines Containerschiffs mit einem enorm grossen Motor, der beispielweise bis zu zwölf Zylinder oder mehr hat und eine Leistung von bis zu 10.000KW pro Zylinder, oder sogar noch grössere Leistungen haben kann.

Wie dem Fachmann an sich bekannt ist, bewegt sich in einem normalen Betriebszustand der Hubkolbenbrennkraftmaschine ein Kolben zwischen einem oberen Totpunkt und einem unteren Totpunkt in einem Zylinder, in der Fachsprache auch Zylinderliner genannt, hin und her und treibt über eine Kurbelwelle, die wirkfest mit dem Kolben und einer Schiffsschraube verbunden ist, die Schiffsschraube an. Ein Ausslassventil an einem Zylinderdeckel des Zylinderliners wird mittels einer programmierbaren Kontrolleinrichtung, die in der Praxis eine hydraulische Einrichtung und eine elektronische Einrichtung umfassen kann, über eine Ventilhydraulik hydraulisch betätigt. Dabei kann ein Kurbelwinkel, bei welchem das Auslassventil betätigt wird, durch die programmierbare Kontrolleinrichtung oder Ansteuereinrichtung prinzipiell beliebig vorgegeben werden. Durch Betätigung eines Startluftventils kann der Motor entweder aus dem Stillstand gestartet werden oder, bei genügend kleiner Drehzahl, kann die Drehrichtung des Motors geändert werden.

Zum besseren Verständnis der Erfindung wird im Folgenden schematisch die an sich bekannte allgemeine Funktionsweise einer längsgespülten Hubkolbenbrennkraftmaschine im normalen Betriebszustand nochmals kurz in Erinnerung gerufen. Im Rahmen dieser Anmeldung wird ein Kurbelwinkel von 0° bzw. 360° mit dem unteren Totpunkt UT und ein Kurbelwinkel von 180° mit dem oberen Totpunkt OT identifiziert.

Ausgehend vom unteren Totpunkt, entsprechend einem Kurbelwinkel von 0° bewegt sich der Kolben im Betriebszustand zunächst in Richtung OT, entsprechend einem Kurbelwinkel von 180°. Wenn sich der Kolben in einer Stellung nahe dem unteren Totpunkt befindet sind im normalen Betriebszustand die Spülschlitze im unteren Bereich des Zylinderliners freigegeben sowie das Ausslassventil geöffnet. Solange die Spülschlitze vom Kolben freigegeben sind wird dem Brennraum des Zylinderliners durch die Spülschlitze Frischluft zugeführt und gleichzeitig werden Verbrennungsrückstände durch die Bewegung des Kolbens in Richtung zum oberen Totpunkt durch das Auslassventil aus dem Brennraum ausgespült. Wenn der Kolben die Spülschlitze vollständig passiert hat, so dass keine Verbindung mehr zwischen Brennraum und Spülschlitzen besteht, wird bei zunehmendem Kurbelwinkel auch das Auslassventil bei einem vorgegebenen Kurbelwinkel mittels der Kontrolleinrichtung geschlossen. Im weiteren Verlauf wird durch ein Einspritzventil dem Brennraum des Motors, welcher sich aus dem oberen Zylinderbereich, dem darüber befindlichen Zylinderdeckel und dem Kolbenboden bildet, Kraftstoff zugeführt, der sich in der durch die Kompression erhitzten Luft im Bereich des oberen Totpunktes entzündet, nachfolgend verbrennt und durch diese Energiefreisetzung zur Drucksteigerung im Brennraum des Motors führt.

Nach Durchlaufen des oberen Totpunkts bewegt sich der Kolben wieder in Richtung zum unteren Totpunkt entsprechend einem Kurbelwinkel von 360°. Im normalen Betriebs-und Fahrzustand des Schiffes wird dann bei einem Kurbelwinkel, der deutlich grösser als 180° ist, das Ausslassventil wieder geöffnet und ein neuer Arbeitstakt des Zylinders eingeleitet.

Für den Fall, dass das Schiff abgebremst werden soll, insbesondere, wenn es in einem Notfall innerhalb einer möglichst kurzen Distanz abgebremst werden soll, wurde die Hubkolben-Brennkraftmaschine auch bei den bereits bekannten Verfahren aus dem normalen Betriebszustand wie folgt zum Bremsen oder Umsteuern in einen anderen Betriebszustand versetzt. In einem ersten Schritt ist es bekannt die Treibstoffzufuhr in die Zylinderliner der Hubkolbenbrennkraftmaschine zu unterbrechen. Durch die Unterbrechung der Treibstoffzufuhr wird erreicht, dass die Drehzahl des Motors zunächst abfällt, was zu einer ersten moderaten Verlangsamung des Schiffes führt. Werden keine weiteren Massnahmen ergriffen, verringert sich die Geschwindigkeit des Schiffes im Wesentlichen aufgrund der Reibung des Schiffes im Wasser. Diese Reibung ist im Allgemeinen vergleichsweise gering, so dass sich die Geschwindigkeit des Schiffes nur sehr langsam verringert. Die Schiffsschraube, die nach unterbrochener Treibstoffzufuhr von der Hubkolbenbrennmaschine nicht mehr vom Motor angetrieben wird, arbeitet jetzt, angetrieben durch die noch vorhandene Bewegungsenergie des Schiffes als Turbine und treibt ihrerseits jetzt den Motor an, mit dem sie über die Kurbelwelle drehfest verbunden ist.

Wird die Steuerung des Auslassventils wie im normalen Betrieb und im Stand der Technik bisher praktiziert unverändert beibehalten, wird zwar zunächst ein Teil der Bewegungsenergie des Schiffes im Zylinder im Kurbelwinkelbereich zwischen 0° und 180° in Kompressionsenergie umgewandelt; allerdings wird diese Kompressionsenergie bei der anschliessenden Expansion der im Zylinderliner eingeschlossenen Spülluft während der Bewegung des Kolbens vom oberen Totpunkt zum unteren Totpunkt dem Schiff fast vollständig in Form von Bewegungsenergie über die Schiffsschraube wieder zurückgeführt.

Hier setzt nun die Erfindung an, der die Erkenntnis zugrunde liegt, dass im Wesentlichen allein durch eine geeignete Steuerung des Auslassventils eine schnelle Umsteuerung bzw. Abbremsung des Motors möglich ist und dieser im Speziellen sogar ohne Startluft, zumindest mit weniger Startluft als bisher im Stand der Technik notwendig in die entgegensetzte Drehrichtung neu gestartet werden kann, sofern die über die Schiffschraube dem Motor vermittelte Bremsenergie gemäss der Erfindung geschickt genutzt wird.

Durch die vorliegende Erfindung kann somit mit Hilfe einer intelligenten Auslassventilsteuerung das Umsteuern eines 2-Takt Dieselmotors beschleunigt und mit zumindest vermindertem, im günstigsten Fall sogar ohne Startluftverbrauch in die entgegengesetzte Richtung gestartet werden.

Hierbei wird gemäss der Erfindung die Energie genutzt, die dem Motor durch die aktuelle Bewegung des Schiffes über den Propeller und der zum Motor verbunden Propellerwelle zugeführt wird, um den Motor wie eine Feder aufzuladen. Das selbständige Entladen dieser Energie in die entgegengesetzte Richtung unterstützt das Starten in derselben entgegengesetzten Richtung mit zumindest geringerem Startluftverbrauch als sonst nötig ist.

Eine Voraussetzung für die erfolgreiche Durchführung des erfindungsgemässen Verfahrens ist, das die Energie, die dem Motor zugeführt wird, geringer ist als die Bremsleistung die durch die Summe der Komprimierung und Vakuumerzeugung aller Zylinder zum aktuellen Moment und bei aktueller Drehzahl erzeugt wird. Daher wird die Drehung des Motors bzw. die Geschwindigkeit des Schiffes bevorzugter Weise in einer Vorbremsphase zunächst bis zu einer vorgegebenen Grenzdrehzahl reduziert, bis die zuvor genannte Voraussetzung erfüllt ist und das erfindungsgemässe Umsteuerverfahren eingesetzt werden kann.

Umsteuerverfahren der vorliegenden Erfindung kann besonders bevorzugt im Manövrierbetrieb genutzt werden wo ein ständiger Wechsel zwischen Ahead - Stop - Astern mit unterschiedlichsten Kombinationen über das STOP Kommando und erhöhtem Startluftverbrauch stattfindet.

Ganz allgemein kann das vorgeschlagene Umsteuerverfahren immer dann erfolgreich angewendet werden, wenn ein Wechsel der Drehrichtung ausgeführt werden soll.

Als weitere Voraussetzung ist zu nennen, dass das Schiff nicht nur nicht zu schnell sein darf wie oben erläutert, sondern dass das Schiff auch noch genügend Fahrt haben muss um dem Motor über die Schiffsschraube noch ausreichend Energie zuführen zu können, so dass er sich ohne eine Kraftstoffeinspritzung noch drehen kann und dem Motor noch genügend Energie zugeführt werden kann, so dass die Umsteuerung des Motors möglichst ohne Startluft, zumindest mit im Vergleich zum Stand der Technik mit deutlich weniger Startluft noch gelingt.

Die erste Phase des erfindungsgemässen Umsteuerverfahrens ist eine Leerlaufphase, bei der die Steuerung des Schiffs von AHEAD oder ASTERN auf STOP gestellt wird. Der Motor dreht durch die fortgeführte Bewegung des Schiffes in seiner ursprünglichen Drehrichtung weiter. Die Kraftstoffzufuhr ist abgestellt und die Auslassventile, möglichst alle, zumindest aber eine Mehrzahl werden nach der letzten Kraftstoffverbrennung bis zur nächsten Steuerungsänderung offen gehalten bzw. werden sobald geöffnet, als der im Zylinder vorherrschende Gasdruck das Öffnen der Auslassventile erlaubt.

Wird nun von der Steuerung ein Richtungswechsel vorgegeben und der Motor befindet sich zumindest bei oder ist geeignet unterhalb der Grenzdrehzahl, werden in einer zweiten Phase des erfindungsgemässen Umsteuerverfahrens bevorzugt im selben Moment alle Ventile geschlossen, die sich oberhalb der Spülluftschlitze befinden. Das bedeutet alle Zylinder die zum Zeitpunkt des Steuerbefehls durch das direkte Schliessen des Auslassventils entweder eine Kompression oder Vakuum erzeugen können. Alternativ können auch nur diejenigen Zylinder geschlossen werden, die eine Kompression erzeugen oder in Kombination mit Zylindern die ein begrenztes maximales Vakuum in diesem Moment erzeugen.

Ist das Schiff bzw. die Drehung des Motors noch zu schnell, also die Grenzzahl noch nicht erreicht bzw. noch nicht unterschritten, kann dem erfindungsgemässen Umsteuerverfahren in einer Vorbremsphase ein an sich bekanntes Standardbremsverfahren vorgeschaltet werden, oder z.B. ein Schnellbremsverfahren vorgeschaltet werden, wie es die Anmelderin in einer früheren Patentanmeldung bereits beschrieben hat und wie es weiter unten noch als ein mögliches Vorbremsverfahren beschrieben werden wird.

Ist die Grenzdrehzahl erreicht oder unterschritten wird das Vorbremsverfahren beendet und die Auslassventile werden z.B. nach aktueller Zündfolge geöffnet. Im Moment in dem alle Auslassventile geöffnet sind, wird die beschriebene zweite Phase durchgeführt.

Der Motor wird dann schliesslich bevorzugt in weniger als einer halben Umdrehung durch die Aufladung mit Luft gestoppt und entlädt sich wieder in die entgegengesetzte Richtung, was im Rahmen der vorliegenden Anmeldung als Kickstart bezeichnet wird. Der Kickstart kann je nach Anforderung, z.B. je nach aktueller Drehzahl zusätzlich durch Zufuhr von Startluft unterstützt werden, jedoch zumindest mit merklich weniger Startluft nötig als bei den bekannten aus dem Stand der Technik herkömmlichen Verfahren.

Die Beschleunigung der Drehung des Motors bzw. des Schiffes in die entgegengesetzte Richtung und der Start des Motors in entgegengesetzter Richtung wird dann spätestens bevorzugt nach einer halben Umdrehung wie beim normalen Startverfahren eventuell durch weitere Startluftzuführung oder bereits durch Kraftstoffeinspritzung und der an sich bekannten normalen Auslassventilsteuerung eingeleitet. Sollte die erreichte Drehgeschwindigkeit zum Starten des Motors nicht ausreichen oder wird ein der gewünschten Drehrichtung ungünstiges Vakuum in der Entladungsphase erzeugt, kann dies durch entsprechende Zufuhr von Startluft behoben werden.

Sollte das hydraulische System zur Ansteuerung der Auslassventile nicht in der Lage sein pro Zylinder die Auslassventile ständig offen zu halten kann eine Entlastungsteuerung eingesetzt werden. Dieser wird durch ein kurzes Schliessen und wieder öffnen des Auslassventils, in der Phase in der sich der Kolben unterhalb der Spülluftschlitze, d.h. im Bereich des unteren Totpunktes befindet, ausgeführt.

Durch die vorliegende Erfindung wird somit erstmals ein Umsteuerverfahren bereitgestellt, mit welchem ein Motor, insbesondere ein langsam laufender längsgespülter Zweitakt-Grossdieselmotor effizienter und schneller in eine entgegengesetzte Drehrichtung umgesteuert werden kann, wobei gleichzeitig zusätzlich wertvolle Startluft eingespart werden kann. In einem besonders bevorzugten Ausführungsbeispiel eines erfindungsgemässen Verfahrens kann ein Neustart in die entgegengesetzte Drehrichtung sogar ganz ohne Startluft, bei einem Schiff beispielsweise unter Ausnützung der durch die Schiffsschraube dem Motor vermittelte Bremsenergie initiiert werden, was nicht nur unter wirtschaftlichen Gesichtspunkten selbstverständlich einen nicht zu unterschätzende Verbesserung darstellt, sondern insbesondere auch dann, wenn das erfindungsgemässe Verfahren zum Umsteuern oder Abbremsen eines Motors eines Schiffes eingesetzt wird, auch unter sicherheitstechnischen Gesichtspunkten einen enormen Fortschritt darstellt.

In einem bevorzugten Ausführungsbeispiel des erfindungsgemässen Umsteuerverfahrens werden in der ersten Abbremsphase unterhalb der vorgegebenen Grenzdrehzahl die Mehrzahl der Auslassventile des Motors gleichzeitig geöffnet bzw. es werden besonders vorteilhaft alle Auslassventile des Motors in der vorgegebenen Reihenfolge geöffnet, wobei unter einer vorgegeben Reihenfolge selbstverständlich auch verstanden werden kann, dass ein Teil oder alle Auslassventile des Motors gleichzeitig geöffnet werden.

Dabei kann die Bremswirkung zur Reduzierung der Drehgeschwindigkeit des Motors in der zweiten Abbremsphase weiter dadurch unterstützt werden, dass zusätzlich ein Teil oder alle Auslassventile derjenigen Zylinder möglichst gleichzeitig geschlossen werden, bei welchen die Zuführung einer Spülluft durch die Spülschlitze des Zylinders unterbunden ist und in welchen sich der zugeordnete Kolben in einem Expansionshub zwischen einem Kurbelwinkel von 180° und 360° befindet.

Ganz besonders vorteilhaft kann gemäss der vorliegenden Erfindung die Umkehrung der Drehrichtung des Motors in der Kickstartphase im Speziellen ganz ohne die Zuführung einer Startluft in einen Zylinder initiiert werden. Oder aber es kann die Umkehrung der Drehrichtung des Motors in der Kickstartphase durch die Zuführung einer Startluft in mindestens einen der sich im Kompressionshub befindlichen Zylinder unterstützt werden. Aber auch in diesen Fällen wird im Vergleich zum Stand der Technik durch Verwendung des erfindungsgemässen Umsteuerverfahrens deutlich weniger Startluft verbraucht.

Optional kann wie bereits erwähnt und oben ausführlich beschrieben zu einer ersten Reduzierung der Drehzahl des Motors bereits in der Vorbremsphase oberhalb der vorgegebenen Grenzdrehzahl die Treibstoffzufuhr zur Hubkolbenbrennkraftmaschine unterbrochen werden, so dass die Drehgeschwindigkeit bis zu oder unterhalb der Grenzdrehzahl reduziert wird, so dass das erfindungsgemässe Umsteuerverfahren erfolgreich eingesetzt werden kann.

Da in bestimmten Fällen der Vorbremsphase ebenfalls eine sehr wichtige Bedeutung zuzumessen ist, soll im Folgenden noch ausführlich ein entsprechendes besonders geeignetes Vorbremsverfahren in verschiedenen Varianten beschrieben werden. Insbesondere dann, wenn das Schiff eine verhältnismässig hohe Geschwindigkeit hat bzw. der Motor sich noch bei einer verhältnismässig hohen Drehzahl befindet, ist es oft wesentlich, nicht nur aber zum Beispiel in Notbremssituationen das Schiff möglichst schnell soweit abzubremsen, das der Motor bis auf die Grenzdrehzahl abgebremst wird, so dass möglichst rasch das erfindungsgemässe Umsteuerverfahren zum Einsatz kommen kann.

Dazu kann in der Vorbremsphase beispielsweise nicht nur die Treibstoffzufuhr unterbrochen werden. Zusätzlich kann das Hydraulikmedium unter einem vorgegebenen maximalen Öffnungsdruck der Ventilhydraulik eines ersten Auslassventils eines ersten Zylinders bei einem ersten Kurbelwinkel im Bereich der oberen Totpunktposition des dem ersten Zylinder zugeordneten ersten Kolbens bereitgestellt werden, so dass das erste Auslassventil, frühestens beim Durchlaufen des ersten Kolbens durch seine obere Totpunktpunktposition, bei einem zweiten Kurbelwinkel durch die Ventilhydraulik automatisch geöffnet wird. Die Beaufschlagung des Hydrauliksystems mit dem maximalen Öffnungsdruck stellt somit sicher, dass das entsprechende Auslassventil zum frühest möglichen Zeitpunkt nach dem oberen Totpunkt geöffnet wird, so dass möglichst wenig Druckenergie in die Bewegung der Schiffschraube zurückgespeist wird.

Bei einem bevorzugten Ausführungsbeispiel eines erfindungsgemässen Umsteuerverfahrens wird der zweite Kurbelwinkel in einem Bereich zwischen dem oberen Totpunkt und dem unteren Totpunkt des ersten Kolbens bei einem Wert zwischen 180° und 360°, bevorzugt bei einem Wert zwischen 180° und 225°, oder zwischen 180° und 200° gewählt, besonders bevorzugt bei einem zweiten Kurbelwinkel, der zwischen 180° und 190° nach dem oberen Totpunkt des ersten Kolbens liegt.

Um eine weitere Verbesserung der Bremswirkung in der Vorbremsphase zu erzielen, wird zur Erzeugung eines vorgegebenen Unterdrucks im ersten Zylinder das erste Auslassventil bei einem dritten Kurbelwinkel im Bereich zwischen dem zweiten Kurbelwinkel und dem unteren Totpunkt des ersten Kolbens wieder geschlossen wird. Je nachdem in welcher Phase der Vorbremsphase des Motors diese Massnahme ergriffen wird, kann im Wesentlichen der folgende positive Effekte bewirkt werden.

Wird die Erzeugung des Unterdrucks im ersten Zylinder in der Vorbremsphase der Drehung des Motors in die erste Drehrichtung vorgenommen und der dritte Kurbelwinkel entsprechend gewählt, kann durch das Schliessen des Auslassventils bei geeigneter Wahl des dritten Kurbelwinkels derart ein Unterdruck im ersten Zylinder aufgebaut werden, dass das Abbremsen der Drehung der Hubkolbenbrennkraftmaschine in die erste Drehrichtung durch den Aufbau des Unterdrucks unterstützt wird. Es entsteht dadurch also eine zumindest leichte Sogwirkung auf den Kolben, so dass eine entsprechende Bremsung der Kolbenbewegung bewirkt wird, die dem Motor zusätzlich Bewegungsenergie entzieht und so das Abbremsen beschleunigt.

Eine weitere zusätzliche oder alternative Massnahme eines erfindungsgemässen Verfahrens besteht darin, dass das erste Auslassventil bei einem vierten Kurbelwinkel zwischen dem unteren Totpunkt und dem oberen Totpunkt, bevorzugt bei einem vierten Kurbelwinkel geschlossen wird, der nach einem Beenden der Zufuhr von Spülluft in den Zylinder erreicht wird.

Dadurch kann dann, wenn in der Abbremsphase der Drehung der Hubkolbenbrennkraftmaschine der vierte Kurbelwinkel so gewählt wird, dass durch das Schliessen des ersten Auslassventils beim vierten Kurbelwinkel ein Überdruck im ersten Zylinder aufgebaut wird, das Abbremsen der Drehung der Hubkolbenbrennkraftmaschine in die erste Drehrichtung durch den Aufbau des Überdrucks unterstützt werden. Und zwar, weil durch den sich im Zylinder aufbauenden Druck dem Motor Bewegungsenergie entzogen wird, indem die Bewegungsenergie in Druckenergie umgewandelt wird, wodurch das Abbremsen der Drehbewegung des Motors in die erste Drehrichtung sehr wirksam unterstützt wird.

In der Praxis hat die Hubkolbenbrennkraftmaschine eine Mehrzahl von Zylindern, die sich in an sich bekannter Weise zum gleichen Zeitpunkt zumindest teilweise jeweils bei verschiedenen Kurbelwinkeln befinden, so dass die hier genannten Massnahmen zur Beschleunigung des Abbremsen bzw. Umsteuerns des Motors gleichzeitig ergriffen werden können, so dass sich ein kumulativer Effekt der verschiedenen Massnahmen ergibt.

Die Erfindung betrifft schliesslich auch ein Computerprogrammprodukt zur Installation auf einer Datenverarbeitungsanlage zur Ansteuerung eines Motors in Form eines längsgespülten Zweitakt-Grossdieselmotors zur Durchführung eines erfindungsgemässen Umsteuerverfahrens, sowie einen Motor, insbesondere Hubkolbenbrennkraftmaschine in Form eines langsam laufenden längsgespülten Zweitakt-Grossdieselmotors umfassend eine Datenverarbeitungsanlage mit einem Computerprogrammprodukt Durchführung eines Umsteuerverfahrens wie in dieser Anmeldung beschrieben.

Es versteht sich, dass die in dieser Anmeldung beschriebenen Ausführungsbeispiele der Erfindung je nach Anwendung auch in jeder geeigneten Weise kombinierbar sind und die beschriebenen speziellen Ausführungsbeispiele lediglich exemplarisch zu verstehen sind. Der Fachmann erkennt sofort einfache vorteilhafte Weiterbildungen der beschriebenen Ausführungsbeispiele der Erfindung und versteht, dass auch solche einfachen Weiterbildungen selbstverständlich von der Erfindung erfasst sind.

## Patentansprüche

1. Umsteuerverfahren zum schnellen Umsteuern einer Drehung eines Motors in Form eines längsgespülten Zweitakt-Grossdieselmotors umfassend eine Mehrzahl von Zylinder, in welchen ein Kolben zwischen einem oberen Totpunkt entsprechend einem Kurbelwinkel von 180° und einem unteren Totpunkt entsprechend einem Kurbelwinkel von 0° bzw. 360° hin- und herbewegbar angeordnet ist, sowie mit einem Ausslassventil, das über eine elektronische Ansteuereinrichtung hydraulisch mittels eines unter einem vorgegebenen Öffnungsdruck stehenden Hydraulikmediums über eine Ventilhydraulik betätigt wird, und bevorzugt anschliessend an eine Vorbremsphase mindestens die folgenden Verfahrensschritte umfasst:
- in einer ersten Abbremsphase wird zur Reduzierung einer Drehgeschwindigkeit der Drehung des Motors in eine erste Drehrichtung eine Treibstoffzufuhr zum Motor mittels eines Stop-Kommandos an die Ansteuereinrichtung unterbrochen und / oder die Treibstoffzufuhr bleibt unterbrochen, **dadurch gekennzeichnet, dass**
- in der ersten Abbremsphase unterhalb einer vorgegebenen Grenzdrehzahl eine Mehrzahl der Auslassventile des Motors in einer vorgegeben Reihenfolge geöffnet werden und die geöffneten Auslassventile bis zum Abschluss der ersten Abbremsphase geöffnet bleiben,
- in einer zweiten Abbremsphase zumindest alle Auslassventile derjenigen Zylinder gleichzeitig geschlossen werden, bei welchen die Zuführung einer Spülluft durch die Spülschlitze des Zylinders unterbunden ist und in welchen sich der zugeordnete Kolben in einem Kompressionshub zwischen einem Kurbelwinkel von 0° und 180° befindet, so dass
- der Motor in einer der zweiten Abbremsphase folgenden Kickstartphase in eine zur ersten Drehrichtung entgegengesetzten Drehrichtung gedreht wird.

2. Umsteuerverfahren nach Anspruch 1, wobei in der ersten Abbremsphase unterhalb der vorgegebenen Grenzdrehzahl die Mehrzahl der Auslassventile des Motors gleichzeitig geöffnet werden.

3. Umsteuerverfahren nach einem der Ansprüche 1 oder 2, wobei in der ersten Abbremsphase unterhalb der vorgegebenen Grenzdrehzahl alle Auslassventile des Motors in der vorgegebenen Reihenfolge geöffnet werden.

4. Umsteuerverfahren nach einem der vorangehenden Ansprüche, wobei in der ersten Abbremsphase unterhalb der vorgegebenen Grenzdrehzahl alle Auslassventile des Motors gleichzeitig geöffnet werden.

5. Umsteuerverfahren nach einem der vorangehenden Ansprüche, wobei in der zweiten Abbremsphase zusätzlich alle Auslassventile derjenigen Zylinder gleichzeitig geschlossen werden, bei welchen die Zuführung einer Spülluft durch die Spülschlitze des Zylinders unterbunden ist und in welchen sich der zugeordnete Kolben in einem Expansionshub zwischen einem Kurbelwinkel von 180° und 360° befindet.

6. Umsteuerverfahren Nach einem der vorangehenden Ansprüche, wobei die Umkehrung der Drehrichtung des Motors in der Kickstartphase ohne die Zuführung einer Startluft in einen Zylinder initiiert wird.

7. Umsteuerverfahren nach einem der vorangehenden Ansprüche 1 bis 5, wobei die Umkehrung der Drehrichtung des Motors in der Kickstartphase durch die Zuführung einer Startluft in mindestens einen der sich im Kompressionshub befindlichen Zylinder unterstützt wird.

8. Umsteuerverfahren nach einem der vorangehenden Ansprüche, wobei zu einer ersten Reduzierung der Drehzahl des Motors bereits in der Vorbremsphase oberhalb der vorgegebenen Grenzdrehzahl die Treibstoffzufuhr zur Hubkolbenbrennkraftmaschine unterbrochen wird.

9. Umsteuerverfahren nach einem der Ansprüche 1 bis 8, wobei zu einer ersten und / oder weiteren Reduzierung der Drehzahl des Motors bereits in der Vorbremsphase oberhalb der vorgegebenen Grenzdrehzahl die Treibstoffzufuhr zum Motor unterbrochen wird und zur Beschleunigung der Reduzierung der Drehzahl des Motors das Hydraulikmedium unter einem vorgegebenen maximalen Öffnungsdruck der Ventilhydraulik eines ersten Auslassventils eines ersten Zylinders bei einem ersten Kurbelwinkel im Bereich der oberen Totpunktposition des dem ersten Zylinder zugeordneten ersten Kolbens bereitgestellt wird, so dass das erste Auslassventil frühestens beim Durchlaufen des ersten Kolbens durch seine obere Totpunktpunktposition bei einem zweiten Kurbelwinkel durch die Ventilhydraulik automatisch geöffnet wird.

10. Umsteuerverfahren nach Anspruch 9, wobei der zweite Kurbelwinkel in einem Bereich zwischen dem oberen Totpunkt und dem unteren Totpunkt des ersten Kolbens bei einem Wert zwischen 180° und 360°, bevorzugt bei einem Wert zwischen 180° und 225°, oder zwischen 180° und 200°, besonders bevorzugt bei einem zweiten Kurbelwinkel zwischen 180° und 190° nach dem oberen Totpunkt des ersten Kolbens liegt.

11. Umsteuerverfahren nach einem der Ansprüche 9 oder 10, wobei zur Erzeugung eines vorgegebenen Unterdrucks im ersten Zylinder das erste Auslassventil bei einem dritten Kurbelwinkel im Bereich zwischen dem zweiten Kurbelwinkel und dem unteren Totpunkt des ersten Kolbens wieder geschlossen wird.

12. Umsteuerverfahren nach Anspruch 8, wobei der dritte Kurbelwinkel so gewählt wird, dass durch das Schliessen des ersten Auslassventils beim dritten Kurbelwinkel derart ein Unterdruck im ersten Zylinder aufgebaut wird, dass das Abbremsen der Drehung des Motors in die erste Drehrichtung durch den Aufbau des Unterdrucks unterstützt wird.

13. Umsteuerverfahren nach einem der vorangehenden Ansprüche, wobei die Vorbremsphase ein Notbremsverfahren zum Abbremsen des Motors auf die vorgegebene Grenzdrehzahl ist.

## Claims

1. A reversing method for a fast reversal of a rotation of an engine in the form of a uniflow scavenged large two-stroke diesel engine, comprising a cylinder in which a piston is arranged movable to and fro between a top dead center corresponding to a crank angle of 180° and a bottom dead center corresponding to a crank angle of 0° or 360°, and having an outlet valve which is hydraulically actuated via an electronic control device by means of a hydraulic medium at a predefined opening pressure via valve hydraulics, and preferably comprises at least the following method steps subsequent to a prebraking phase:
- in a first braking phase, a fuel supply to the engine is interrupted and/or the fuel supply remains interrupted by means of a stop command to the control device to reduce a rotational speed of the rotation of the engine in a first direction of rotation, **characterized in that**
- a plurality of the outlet valves of the engine are opened in a predefined order below a predefined limit speed of rotation in the first braking phase and the opened outlet valves remain open up to the end of the first braking phase;
- in a second braking phase, at least all the outlet valves of those cylinders are closed simultaneously in which the supply of scavenging air through the scavenging slits of the cylinder is inhibited and in which the associated piston is in a compression stroke between a crank angle of 0° and 180° so that
- the engine is rotated in a direction of rotation opposite to the first direction of rotation in a kick-start phase following the second braking phase.

2. A reversing method in accordance with claim 1, wherein the plurality of outlet valves of the engine are simultaneously opened in the first braking phase below the predefined limit speed of rotation.

3. A reversing method in accordance with one of the claims 1 or 2, wherein all the outlet valves of the engine are opened in the predefined order in the first braking phase below the predefined limit speed of rotation.

4. A reversing method in accordance with any one of the preceding claims, wherein all the outlet valves of the engine are opened simultaneously in the first braking phase below the predefined limit speed of rotation.

5. A reversing method in accordance with any one of the preceding claims,
wherein, in the second braking phase, all the outlet valves of those cylinders are additionally closed simultaneously in which the supply of scavenging air through the scavenging slits of the cylinder is inhibited and in which the associated piston is in an expansion stroke between a crank angle of 180° and 360°.

6. A reversing method in accordance with any one of the preceding claims,
wherein the reversal of the direction of rotation of the engine is initiated in the kick-start phase without the supply of starting air into a cylinder.

7. A reversing method in accordance with any one of the preceding claims 1 to 5, wherein the reversal of the direction of rotation of the engine is assisted in the kick-start phase by the supply of starting air into at least one of the cylinders in the compression stroke.

8. A reversing method in accordance with any one of the preceding claims,
wherein the fuel supply to the reciprocating piston internal combustion engine is already interrupted in the prebraking phase above the predefined limit speed of rotation for a first reduction of the speed of rotation of the engine.

9. A reversing method in accordance with any one of the claims 1 to 8,
wherein the fuel supply to the engine is already interrupted in the prebraking phase above the predefined limit speed for a first and/or further reduction of the speed of rotation of the engine and the hydraulic medium is provided at a predefined maximum opening pressure of the valve hydraulics of a first outlet valve of a first cylinder at a first crank angle in the region of the top dead center position of the first piston associated with the first cylinder for the acceleration of the reduction of the speed of rotation of engine so that the first outlet valve is automatically opened by the valve hydraulics at a second crank angle at the earliest on the passing of the first piston through its top dead center position.

10. A reversing method in accordance with claim 9, wherein the second crank angle lies in a range between the top dead center and the bottom dead center of the first piston at a value between 180° and 360°, preferably at a value between 180° and 225°, or between 180° and 200°, particularly preferably at a second crank angle between 180° and 190° after the top dead center of the first piston.

11. A reversing method in accordance with one of the claims 9 or 10, wherein, to generate a predefined vacuum in the first cylinder, the first outlet valve is closed again at a third crank angle in the region between the second crank angle and the bottom dead center of the first piston.

12. A reversing method in accordance with claim 8, wherein the third crank angle is selected such that a vacuum is built up in the first cylinder by the closing of the first outlet valve at the third crank angle such that the braking of the rotation of the engine in the first direction of rotation is assisted by the build-up of the vacuum.

13. A reversing method in accordance with any one of the preceding claims,
wherein the prebraking phase is an emergency braking process for braking the engine to the predefined limit speed of rotation.

## Revendications

1. Procédé d'inversion pour l'inversion rapide d'une rotation d'un moteur sous forme de gros moteur diesel à deux temps à balayage longitudinal comprenant une pluralité de cylindres dans lesquels un piston est disposé de façon à pouvoir effectuer un mouvement de va-et-vient entre un point mort haut correspondant à un angle de vilebrequin de 180° et un point mort bas correspondant à un angle de vilebrequin de 0° ou respectivement 360°, ainsi qu'avec une soupape d'échappement qui est actionnée par le biais d'un dispositif de pilotage électronique hydrauliquement au moyen d'un agent hydraulique qui est soumis à une pression d'ouverture prédéfinie par le biais d'un système hydraulique de soupape, et comprend de préférence, à la suite d'une phase de pré-freinage, au moins les étapes de procédé suivantes :
- dans une première phase de freinage, pour réduire une vitesse de rotation de la rotation du moteur dans un premier sens de rotation, une amenée de carburant au moteur est interrompue au moyen d'une instruction d'arrêt adressée au dispositif de pilotage et/ou l'amenée de carburant demeure interrompue, **caractérisé en ce que**
- dans la première phase de freinage au-dessous d'une vitesse de rotation limite prédéfinie, une majeure partie des soupapes d'échappement du moteur sont ouvertes dans un ordre prédéfini et les soupapes d'échappement ouvertes demeurent ouvertes jusqu'à la fin de la première phase de freinage,
- dans une deuxième phase de freinage, au moins toutes les soupapes d'échappement des cylindres pour lesquels l'amenée d'un air de balayage à travers les lumières de balayage du cylindre est empêchée et dans lesquels le piston affecté se trouve dans une course de compression entre un angle de vilebrequin de 0° et 180° sont fermées simultanément, de telle sorte que
- le moteur, dans une phase de démarrage au pied qui suit la deuxième phase de freinage, est tourné dans un sens de rotation qui est opposé au premier sens de rotation.

2. Procédé d'inversion selon la revendication 1, dans lequel, dans la première phase de freinage au-dessous de la vitesse de rotation limite prédéfinie, la majeure partie des soupapes d'échappement du moteur sont ouvertes simultanément.

3. Procédé d'inversion selon l'une des revendications 1 ou 2, dans lequel, dans la première phase de freinage au-dessous de la vitesse de rotation limite prédéfinie, toutes les soupapes d'échappement du moteur sont ouvertes dans l'ordre prédéfini.

4. Procédé d'inversion selon l'une des revendications précédentes, dans lequel, dans la première phase de freinage au-dessous de la vitesse de rotation limite prédéfinie, toutes les soupapes d'échappement du moteur sont ouvertes simultanément.

5. Procédé d'inversion selon l'une des revendications précédentes, dans lequel, dans la deuxième phase de freinage, toutes les soupapes d'échappement des cylindres pour lesquels l'amenée d'un air de balayage à travers les lumières de balayage du cylindre est empêchée et dans lesquels le piston affecté se trouve dans une course de détente entre un angle de vilebrequin de 180° et 360° sont en plus fermées simultanément.

6. Procédé d'inversion selon l'une des revendications précédentes, dans lequel le renversement du sens de rotation du moteur dans la phase de démarrage au pied est lancé sans l'amenée d'un air de démarrage dans un cylindre.

7. Procédé d'inversion selon l'une des revendications précédentes 1 à 5, dans lequel le renversement du sens de rotation du moteur dans la phase de démarrage au pied est assisté par l'amenée d'un air de démarrage dans au moins un des cylindres se trouvant dans la course de compression.

8. Procédé d'inversion selon l'une des revendications précédentes, dans lequel l'amenée de carburant au moteur à combustion à piston alternatif est interrompue pour une première réduction de la vitesse de rotation du moteur déjà pendant la phase de pré-freinage au-dessus de la vitesse de rotation limite prédéfinie.

9. Procédé d'inversion selon l'une des revendications 1 à 8, dans lequel, pour une première réduction et/ou une réduction supplémentaire de la vitesse de rotation du moteur, l'amenée de carburant au moteur est interrompue déjà dans la phase de pré-freinage au-dessus de la vitesse de rotation limite prédéfinie et, pour accélérer la réduction de la vitesse de rotation du moteur, l'agent hydraulique est fourni en présence d'une pression d'ouverture maximale prédéfinie du système hydraulique de soupape d'une première soupape d'échappement d'un premier cylindre pour un premier angle de vilebrequin dans la zone de la position de point mort haut du premier piston affecté au premier cylindre de telle sorte que la première soupape d'échappement est ouverte automatiquement par le système hydraulique de soupape au plus tôt lors du passage du premier position à travers sa position de point mort haut pour un deuxième angle de vilebrequin.

10. Procédé d'inversion selon la revendication 9, dans lequel le deuxième angle de vilebrequin se situe dans une plage entre le point mort haut et le point mort bas du premier piston pour une valeur entre 180° et 360°, de préférence pour une valeur entre 180° et 225°, ou entre 180° et 200°, de façon particulièrement préférée pour un deuxième angle de vilebrequin entre 180° et 190° après le point mort haut du premier piston.

11. Procédé d'inversion selon l'une des revendications 9 ou 10, dans lequel, pour la production d'une dépression prédéfinie dans le premier cylindre, la première soupape d'échappement est refermée pour un troisième angle de vilebrequin dans la plage entre le deuxième angle de vilebrequin et le point mort bas du premier piston.

12. Procédé d'inversion selon la revendication 8, dans lequel le troisième angle de vilebrequin est choisi de telle sorte que, par la fermeture de la première soupape d'échappement pour le troisième angle de vilebrequin, une dépression dans le premier cylindre est établie de telle sorte que le freinage de la rotation du moteur dans le premier sens de rotation est assisté par l'établissement de la dépression.

13. Procédé d'inversion selon l'une des revendications précédentes, dans lequel la phase de pré-freinage est un procédé de freinage d'urgence destiné à freiner le moteur jusqu'à la vitesse de rotation limite prédéfinie.
